# EUROPEAN PATENT APPLICATION

(11) **EP 2 642 437 A1**
(43) Date of publication of application: **25.09.2013**
(21) Application number: 13000161.3
(22) Date of filing: 14.01.2013
(51) Int. Cl.: G06Q 10/08, G06K 7/10

(54) **Device tracking with lighting system**

(30) Priority: 19.03.2012 US 201213423828
(71) Applicant: Redwood Systems, Inc., Fremont CA 94538 (US)
(72) Inventor: Covaro, Mark, Sonoma, CA 95476 (US); Leonard, Dave, Danville, CA 94526 (US)
(74) Representative: Müller-Boré & Partner Patentanwälte

(57) **Abstract**

A system for tracking rack-mount devices may be provided that may include a light fixture and a communication module. The light fixture may include one or more RFID readers and/or one or more antennas configured to read an RFID tag coupled to a rack-mount device. The rack-mount device may be mounted in any mounting position of a modular equipment rack. The communication module may cause a device identifier to be transmitted to a power device that powers the light fixture. The device identifier may identify the rack-mount device determined to be mounted in the modular equipment rack based on any of the RFID readers and/or any of the antennas reading the RFID tag.

## Description

### BACKGROUND

### 1. Technical Field.

This application relates to tracking and, in particular, to device tracking.

### 2. Related Art.

A modular equipment rack, such as a server rack, a server cabinet, a wallmount rack, a network rack, or a LAN (Large Area Network) rack, may be configured to receive rack-mount devices, such as computer servers, routers, network switches, blade servers, disk drive units, or any other rack-mountable device. A person may slide one or more such devices into the rack to install the device. The person may slide the device out of the rack to remove or replace.

### SUMMARY

A system for tracking rack-mount devices may be provided that includes a light fixture and a communication module. The light fixture may include a radio frequency identification (RFID) reader and/or an antenna that is configured to read an RFID tag coupled to a device which is mountable in a modular equipment rack. The communication module may cause a device identifier to be transmitted to a power device that powers the light fixture. The device identifier may identify the device that is mounted in the modular equipment rack based on the RFID reader and/or the antenna reading the RFID tag.

A light fixture for tracking rack-mount devices may be provided. The light fixture may include a radio frequency identification (RFID) reader and/or an antenna. The light fixture may also include a processor. The RFID reader and/or the antenna may be positioned to read an RFID tag coupled to a device when the device is mounted in a modular equipment rack. The processor may provide a message comprising a device identifier to a lighting system. The message may indicate that the device identified by the device identifier is added to and/or removed from the modular equipment rack based on whether the RFID reader and/or the antenna detects the RFID tag.

A method of tracking rack-mount devices with a lighting system may be provided. A light fixture may be co-located with a modular equipment rack. A device identifier may be received from a communication module associated with the light fixture. The device identifier may identify a device determined to be mounted in the modular equipment rack based on a radio frequency identification (RFID) tag being read by a RFID reader, where the RFID tag is coupled to the device. The communication module may receive the device identifier from the RFID reader. A location of the device may be identified based on receipt of the device identifier from the communication module and on the light fixture, which is associated with the communication module, being co-located with the modular equipment rack.

In one interesting aspect, the light fixture may include multiple antennas arranged along a side of the modular equipment rack. Each one of the antennas may be positioned to be within range of the RFID tag when the device is mounted in a respective one of multiple mounting positions in the modular equipment rack. In a second interesting aspect, a card reader coupled to the modular equipment rack may read a user identifier from a card. The communication module may cause the user identifier to be transmitted to the power device, where an indication is stored that a person, who is identified by the user identifier, mounted the device in the modular equipment rack.

Further objects and advantages of the present invention will be apparent from the following description, reference being made to the accompanying drawings wherein embodiments of the present invention are shown.

### BRIEF DESCRIPTION OF THE DRAWINGS

The embodiments may be better understood with reference to the following drawings and description. The components in the figures are not necessarily to scale, emphasis instead being placed upon illustrating the principles of the invention. Moreover, in the figures, like-referenced numerals designate corresponding parts throughout the different views.

FIG. 1 illustrates an example of a system for tracking rack-mount devices with a lighting system;

FIG. 2 illustrates an example of a light fixture that is in the form of a strip or an elongated rectangular cuboid that runs vertically along the rack;

FIG. 3A illustrates an example of a light fixture in which a processor of the light fixture communicates with microcontrollers over a bus;

FIG. 3B illustrates an example of a light fixture in which a processor of the light fixture communicates with the RFID readers over the bus;

FIG. 3C illustrates an example of a light fixture in which a processor of the light fixture is selectively electrically coupled to antennas through a multiplexer;

FIG. 4 illustrates a flow diagram of a first example logic of a system for tracking rack-mount devices with a lighting system;

FIG. 5 illustrates a flow diagram of a second example logic of a system for tracking rack-mount devices with a lighting system; and

FIG. 6 illustrates an example of a light fixture adjacent to a rail of a modular equipment rack.

### DETAILED DESCRIPTION

By way of an example, a light fixture for tracking rack-mount devices may be provided. The light fixture may be coupled to a modular equipment rack. The light fixture may include multiple RFID readers, where each one of the RFID readers is configured to read an RFID tag on a rack-mount device when the rack-mount device is mounted in a respective one of multiple mounting positions in the modular equipment rack. For example, the light fixture may be in the form of a strip having a height that is substantially the same as the height of the modular equipment rack. A communication module may transmit a message comprising a device identifier to a power device that powers the light fixture, where transmission of the message indicates that the rack-mount device identified by the device identifier is added to and/or removed from the modular equipment rack. A determination of whether the identified rack-mount device is added to and/or removed from the modular equipment rack may be based on whether the RFID tag is read by any of the RFID readers. The light fixture or the modular equipment rack may include the communication module in some examples. The power device may identify the location of the rack-mount device based on receipt of the message from the communication module and on the light fixture associated with the communication module being coupled to the modular equipment rack.

In a configuration in which multiple RFID readers and/or multiple antennas are included in the light fixture that runs the height of the modular equipment rack, an RFID tag on any rack-mount device may be read by any of the RFID readers regardless of which of the multiple mounting positions the rack-mount device is in. An existing lighting system may be used for tracking rack-mount devices instead of requiring an installation of an additional dedicated tracking system.

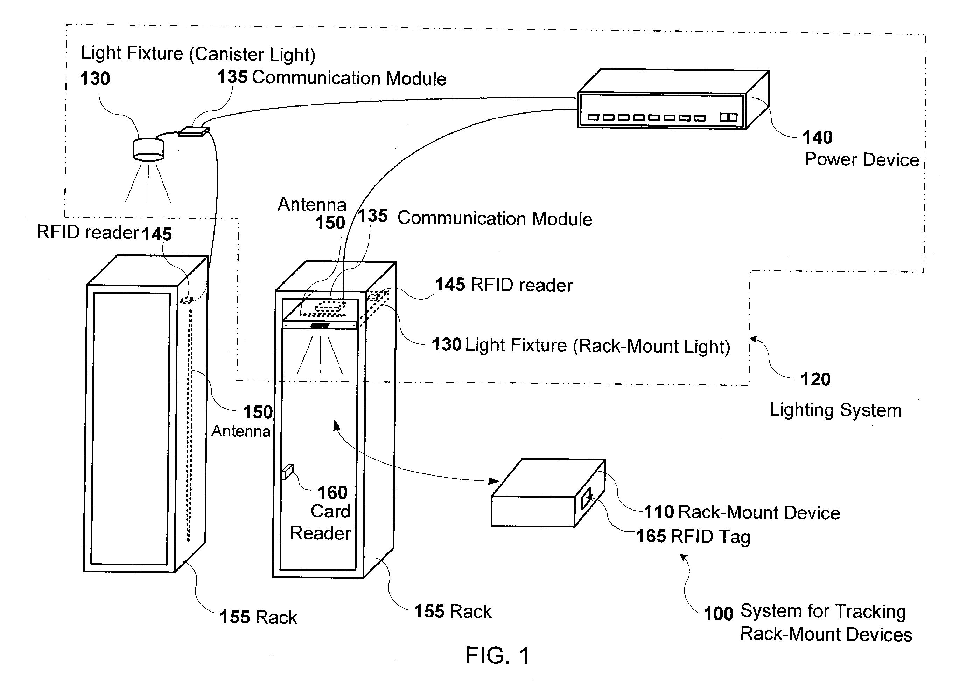

FIG. 1 illustrates an example of a system 100 for tracking rack-mount devices 110 with a lighting system 120. The lighting system 120 may include one or more light fixtures 130 (individually designated "canister light" and "rack-mount light" in FIG. 1), one or more communication modules 135, and a power device 140. The system 100 for tracking the rack-mount devices 110 may include the lighting system 120 or a subset of the elements of the lighting system 120, such one or more of the light fixtures 130. The system 100 for tracking the rack-mount devices 110 may include one or more radio frequency identification (RFID) readers 145 and one or more antennas 150 for the RFID readers 145. Alternatively or in addition, the system 100 for tracking the rack-mount devices 110 may include one or more modular equipment racks 155 and/or one or more card readers 160.

The modular equipment rack 155 may be any frame or enclosure for mounting equipment. Examples of the rack 155 may include a server rack, a server cabinet, a wall mount rack, a network rack, a LAN (Large Area Network) rack, or any other type of frame or enclosure configured to receive rack-mount devices 110. The rack 155 may be a standardized rack, such as a 19-inch rack that conforms to a standardized system for mounting various electronic equipment, such as EIA (Electronic Industries Alliance) 310-D, IEC (International Electrotechnical Commission) 60297, or DIN (Deutsches Institut für Normung) 41494.

The rack-mount device 110 may be any device that is mountable in the modular equipment rack 155. Examples of rack-mount devices 110 may include computer servers, routers, network switches, blade servers, disk drives, or any other device configured to mount in the modular equipment rack 155. The rack-mount device 110 may include and/or be coupled to a radio frequency identification (RFID) tag 165. For example, the RFID tag 165 may be included in, or attached to the outside of, the rack-mount device 110.

Each light fixture 130 may be any electrical device or combination of devices that creates artificial light from electricity. The light fixture 130 may distribute, filter or transform the light from one or more lamps included or installed in the light fixture 130. Alternatively or in addition, the light fixture 130 may include one or more lamps. The lamps may include incandescent bulbs, LEDs (Light Emitting Diodes), fluorescent tubes, any other device now known or later discovered that generates artificial light, or any combination thereof. Light generated by one or more of the light fixtures 130 may illuminate the rack 155 and/or any rack-mount devices 110 included in the rack 155. Examples of the light fixture 130 include a luminaire, a rectangular bar light, a rack-mount light, a rack-mount gooseneck light, a compact fluorescent light, a task/wall bracket fixture, a linear fluorescent high-bay, a spot light, a recessed louver light, a desk lamp, a troffer, a canister light, or any other device that includes one or more lamps.

The light fixture 130 may include additional or fewer components. For example, the light fixture 130 may include the RFID reader 145, the antenna 150, and the communication module 135 or any combination thereof. The example rack-mount light illustrated in FIG. 1 includes the RFID reader 145, the antenna 150, and the communication module 135.

Each one of the light fixtures 130 may be located above the rack 155 (such as the canister light), in the rack 155 (such as the rack-mount light), on the rack 155, or otherwise coupled to the rack 155. If the RFID reader 145 is included in the light fixture 130, then the light fixture 130 may be located in any position where the RFID reader 145 may read the RFID tag 165 coupled to the rack-mount device 110 when the rack-mount device 110 is mounted in the rack 155. For example, the light fixture 130 may be a bar light elongated along an axis of the rack 155 and/or be generally parallel to an axis of the rack 155.

The RFID tag 165 may be any device that wirelessly transmits an identifier. The identifier may be unique to that RFID tag 165. As a result, each one of the rack-mount devices 110 that is tagged with a corresponding RFID tag 165 may be identified by the identifier transmitted by the corresponding RFID tag 165. The RFID reader 145 may be any device that wirelessly reads the identifier transmitted by the RFID tag 165. The RFID reader 145 and the RFID tag 165 may be implemented with any type of radio frequency identification technology now known or later discovered. For example, the RFID tag 165 may include an integrated circuit that encodes digital identification data and an antenna that communicates wirelessly to the RFID reader 145. In one example, the RFID tag 165 may be a passive tag in which power to receive a query and to transmit identification data back to the RFID reader 145 in response to the query is provided wirelessly to the passive tag by the RFID reader 145. In a second example, the RFID tag 165 may be an active tag that includes a local power source, such as a battery. The active tag may provide a higher power radio signal than the passive tag. The higher power radio signal may be read by the RFID reader 145 from a greater distance than the passive tag.

The RFID reader 145 may include a receiver circuit for example. The receiver circuit may be any circuit that receives the identifier from the RFID tag 165. The RFID reader 145 may include a transmitter. Alternatively or in addition, the RFID reader 145 may include a transceiver. The RFID reader 145 may include the antenna 150 and/or be electrically coupled to the antenna 150. In one example, the antenna 150 may extend the range of the RFID reader 145 so that RFID reader 145 may receive the identifier from the RFID tag 165 regardless of the position in the rack 155 of the rack-mount device 110 tagged with RFID tag 165. The antenna 150 may be positioned in any number of ways and take on any number of shapes. In one example, the antenna 150 may include a spiral trace antenna.

The radio frequency identification technology may communicate using frequencies such as near 100 kHz, 10 MHz, various UHF frequencies (100s of MHz to a few GHz), or any other suitable frequency. The choice of frequencies may be determined in part by available radio bands not designated for other applications and in part by desired performance of particular applications. Alternatively or in addition, the choice of frequencies may be determined by the amount of conducting surfaces located near the RFID reader 145 and/or the RFID tag 165. Each frequency band choice may provide different performance and price characteristics.

The card reader 160 may be any device that reads an identification card. For example, the card reader 160 may be a type of RFID reader. In a different example, the card reader 160 may read a magnetic strip in the identification card, such as a debit or a credit card. The identification card may be any card that identifies a person or organization, such as an employee badge or ID (identification) card.

The communication module 135 may be any hardware and/or software that communicates with the power device 140. In one example, the communication module 135 may be included in a light adapter that is external to the light fixture 130. In a second example, the communication module 135 may be included in the light fixture 130, such as in the rack-mount light illustrated in FIG. 1. The light adapter and/or the communication module 135 may be included in a sensor pod that detects motion, temperature or any other physical property. The light adapter, the communication module 135 and/or the sensor pod and may be included in the rack 155, coupled to the rack 155, included in the light fixture 130, located outside of the light fixture 130, and/or located in any other suitable position. The communication module 135 may communicate wirelessly and/or over a wired connection with the power device 140. The communication module 135 may, for example, transmit lighting related information to the power device 140. Examples of lighting related information may include an amount of light detected in an area illuminated by the light fixture 130 and/or any other light sources, occupancy sensor information, temperature sensor information, identification of the light fixture 130, and a module number of the light fixture 130.

The power device 140 may be any device that provides power to the light fixtures 130. The power device 140 may provide power to all of the light fixtures 130 or a subset of the light fixtures 130. Alternatively or in addition, the power device 140 may provide power to one or more of the communication modules 135. The power device 140 may include communication hardware and/or software that communicate with the communication modules 135.

During operation of the systems 100 and 120, a person may slide the rack-mount devices 110 into the racks 155 or otherwise add the rack-mount devices 110 to the racks 155. Alternatively or in addition, the person may slide the rack-mount devices 110 out of the racks 155 or otherwise remove or replace the rack-mount devices 110. Accordingly, the RFID tags 165 coupled to the rack-mount devices 110 may come in or out of range of the RFID readers 145 as the devices 110 are added to or removed from the racks 155.

When one of the rack-mount devices 110 is added to one of the racks 155, the RFID reader 145 associated with the light fixture 130 may receive the identifier from the RFID tag 165. The RFID reader 145 may provide the identifier to the communication module 135. The communication module 135 may transmit a device identifier to the power device 140 to indicate to the power device 140 that the rack-mount device 110 is mounted in the modular equipment rack 155. The device identifier may be any identifier that identifies the rack-mount device 110 coupled to the RFID tag 165. The device identifier may include the identifier received from the RFID tag 165. Alternatively or in addition, the device identifier may be an identifier that is associated with the identifier received from the RFID tag 165. For example, the device identifier may include a description of the rack-mount device 110 that is coupled to the RFID tag 165.

The communication module 135 may, in some examples, transmit status information along with or included in the device identifier. The status information may indicate a detected status of the identified rack-mount device 110. For example, the status information may indicate that the identified rack-mount device 110 is mounted in the modular equipment rack 155.

Conversely, when one of the rack-mount devices 110 is removed from one of the racks 155, the RFID reader 145 associated with the light fixture 130 may detect that the RFID reader 145 no longer receives the identifier from the RFID tag 165. The RFID reader 145 may indicate to the communication module 135 that the RFID reader 145 no longer receives the identifier from the RFID tag 165. The communication module 135 may transmit the device identifier to the power device 140 to indicate to the power device 140 that the rack-mount device 110 is not mounted in the modular equipment rack 155. The communication module 135 may, in some examples, transmit the status information along with or included in the device identifier. For example, the status information may indicate that the identified rack-mount device 110 is not mounted in the modular equipment rack 155.

The power device 140 may track the statuses of the rack-mount devices 110 as the rack-mount devices 110 are added to and removed from the racks 155 associated with the light fixtures 130. In particular, the power device 140 may track the statuses of the rack-mount devices 110 based on messages received from the communication modules 135. As described above, the messages may include the device identifiers and/or the status information. The power device 140 may determine whether each one of the rack-mount devices 110 is mounted in any of the modular equipment racks 155. The power device 140 may store the device identifiers and the status information received in the messages from the communication modules 135 in a memory of the power device 140. Accordingly, the power device 140 may look up the status of any of the rack-mount devices 110.

Alternatively or in addition, the power device 140 may determine or identify locations of the rack-mount devices 110. Each one of the modular equipment racks 155 may be associated or co-located with a corresponding one of the light fixtures 130. The rack 155 may be co-located with the light fixture 130 if, for example, the rack 155 is within a predetermined distance of the light fixture 130 and/or the rack 155 is coupled to the light fixture 130. The co-located or associated light fixture 130 may be installed above the rack 155, coupled to the rack 155, and/or mounted in the rack 155, such as in the example of the rack-mount light illustrated in FIG. 1.

The communication module 135 may be associated with the light fixture 130. The communication module 135 may be associated with the light fixture 130 by being electrically coupled to the RFID reader 145. Alternatively or in addition, the communication module 135 may be associated with the light fixture 130 by being included in the light fixture 130. Alternatively or in addition, the communication module 135 may be associated with the light fixture 130 by being wired to the light fixture 130, such as in the example of the canister light illustrated in FIG. 1. Accordingly, the association of the rack 155 with the light fixture 130 also may form an association between the rack 155 and the communication module 135 that is associated with the light fixture 130. The power device 140 may store an identification of the light fixture 130 and/or an identification of the communication module 135 from which the device identifiers are received in the memory of the power device 140 along with the device identifiers.

The power device 140 may determine that the rack-mount devices 110 identified by the device identifiers received from the communication module 135 are located with the light fixture 130 associated with the communication module 135. More specifically, the power device 140 may determine that the rack-mount devices 110 identified by the device identifiers received from the communication module 135 are located in the rack 155 associated with the light fixture 130 that is associated with the communication module 135. The power device 140 may include a database of locations of the light fixtures 130. The power device 140 may, therefore, determine the location of the rack-mounted devices 110 from the location of the light fixture 130 associated with communication module 135 that transmitted the device identifiers of the rack-mounted devices 110.

The locations of the rack-mount devices 110 that are determined by the power device 140 may be locations within a floor plan, global positioning coordinates, locations within the rack 155, and/or any other type of location. Alternatively or in addition, the locations of the rack-mount devices 110 may be the identification of the light fixtures 130 that are associated with the racks 155 in which the rack-mount devices 110 are mounted. Alternatively or in addition, the locations of the rack-mount devices 110 may be the identification of the racks 155 in which the rack-mount devices 110 are mounted.

In one example, the power device 140 may cause a display of an indication of the location of the rack-mount device 110 in a floor plan. For example, the indication may be a highlighted rack depicted in a floor plan so that the relative position of the highlighted rack in the floor plan may be easily determined by a user. Identifying the location of the device 140 may comprise causing a display of an indication of the location of the device 140 in the floor plan.

In some embodiments, the power device 140 may determine who adds or removes the rack-mount device 110 to or from the rack 155. A user who adds or removes the rack-mount device 110 may position the identification card of the user near, adjacent to, and/or through the card reader 160. The card reader 160 may read a user identifier from the identification card. The user identifier may identify the user and/or the organization associated with the user. The card reader 160 may provide the user identifier to the communication module 135. The communication module 135 may transmit the user identifier to the power device 140. The power device 140 may determine that the user identified by the user identifier adds or removes the rack-mount device 110 to or from the rack 155. The power device 140 may determine that any of the rack-mount devices 110 added or removed to or from the rack 155 during a predetermined time period after the user identifier is received, for example, was added or removed by the person or organization identified by the user identifier.

Alternatively or in addition, a door of the rack 155 may be unlocked by the card reader 160 when the user identifier is read from the identification card. When the door of the rack 155 is subsequently closed and/or locked, the card reader 160 or some other device may indicate to the communication module 135 that the door of the rack is closed. The communication module 135 may transmit information to the power device 140 indicating when the door opens and when the door closes. The power device 140 may determine that any of the rack-mount devices 110 added or removed in the time between when the door of the rack 155 opens and closes was added or removed by the person or organization identified by the user identifier.

In some embodiments, the power device 140 may record when each of the rack-mount devices 110 is added to or removed from any of the racks 155. The power device 140 may therefore track when and where any of the rack-mount devices 110 were added to and/or removed from any of the racks 155.

In one embodiment, the RFID reader 145 and/or the communication module 135 may limit how often a determination is made whether the rack-mount devices 110 are added to or removed from the rack 155 and/or how often changes of the rack-mount devices 110 in the rack 155 are recorded. A door of the rack 155 may be coupled to an RFID tag, such as the RFID tags 165 coupled to the rack-mount devices 110. The RFID reader 145 or some other RFID reader may be able to read the RFID tag coupled to the door when the door is closed, but not when the door is open. Accordingly, the RFID reader 145 and/or the communication module 135 may be able to determine when the door is open or closed. The RFID reader 145 and/or the communication module 135 may determine whether the rack-mount devices 110 are added to or removed from the rack 155 when the door is open, but not when the door is closed. Alternatively or in addition, the RFID reader 145 and/or the communication module 135 may cause changes of the rack-mount devices 110 in the rack 155 to be recorded when the door is open, but not when the door is closed.

The lighting system 120 may include more, fewer, or different elements than are illustrated in FIG. 1. In one example, the lighting system 120 may include a display device and/or user input controls in communication with the power device 140. In a second example, the lighting system 120 may include a computing device that performs one or more of the features that the power device 140 is described above as performing. In a third example, the lighting system 120 may include any number of the power devices 140.

The system 100 for tracking rack-mount devices 110 may include more, fewer, or different elements than are illustrated in FIG. 1. For example, the tracking system 100 may just include the power device 140, the light fixtures 130 that include the RFID readers 145, and the communication modules 135. In another example, the tracking system 110 may include just the RFID readers 145, the communication modules 135 and the power device 140. In yet another example, the tracking system 110 may just include one of the light fixtures 130 comprising the RFID reader 145 and the communication module 135. The tracking system 110 may include the antennas 150 and the racks 155 in some examples.

The devices in the systems 100 and 120 may be arranged in any number of configurations. In one example, multiple light fixtures 130 may be added to a single modular equipment rack 155. In such a configuration, the power device 140 may track the locations of the rack-mount devices 110 in corresponding sections of the single modular equipment rack 155. In a second example, the modular equipment racks 155 may be positioned throughout a building or a site.

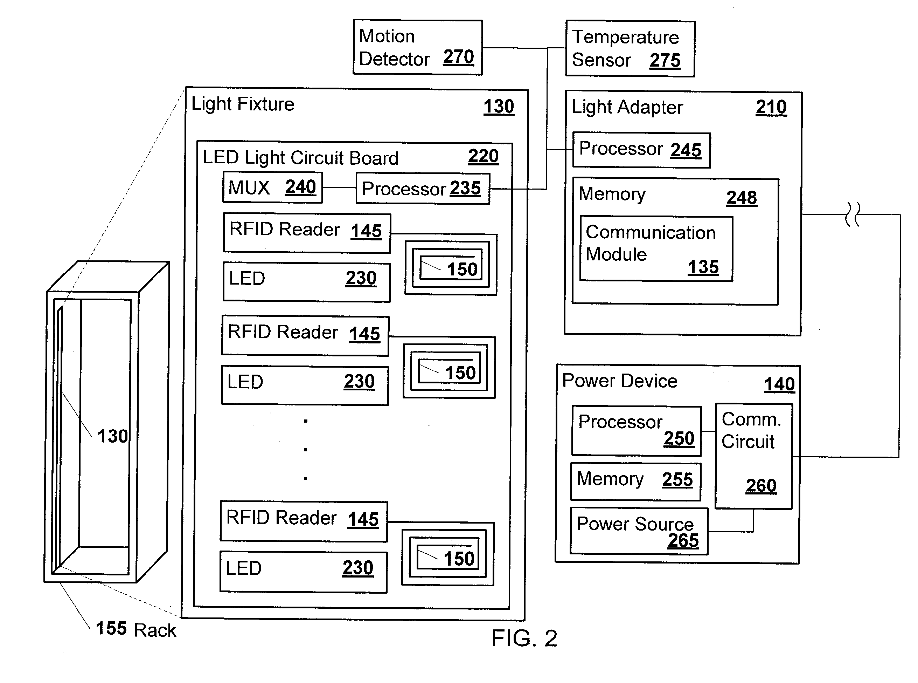

FIG. 2 illustrates an example of the light fixture 130 that is in the form of a strip or an elongated rectangular cuboid positioned along an axis of the rack 155, such as running vertically along the rack 155. The light fixture 130 may be embedded in a rail of the rack 155, coupled to the rail, or otherwise positioned in the rack 155. The light fixture 130 may be embedded in the rail by, for example, including components of the light fixture 130 inside of the rail. The light fixture 130 may include a LED (Light Emitting Diode) light circuit board 220. The LED light circuit board 220 may be a circuit that receives and/or includes Light Emitting Diodes (LEDs) 230. The LEDs may generate the light produced by the light fixture 130 and may be positioned along the length of the light fixture 130. In addition, the LED light circuit board 220 may include multiple RFID readers 145 and multiple antennas 150 positioned along the length of the light fixture 130. The antennas 150 may be spiral trace antennas, for example, that are embedded in the LED light circuit board 220.

The LEDs 230 positioned along the length of the light fixture 130 may provide light to any of the rack-mount devices 110 installed in the rack 155 regardless of where in the rack 155 the rack-mount device 110 is installed. In addition, at least one of the antennas 150 positioned along the length of the light fixture 130 may be near enough to any of the rack-mounted devices 110 installed in the rack 155 to read the RFID tag 165 coupled to the installed rack-mounted device 110.

In one example, the LED light circuit board 220 may include a processor 235 and a multiplexer 240. The processor 235 may selectively communicate with the RFID readers 145 through the multiplexer 240. For example, the processor 235 may sequentially receive the device identifiers from each of the RFID readers 145. In a second example, the LED light circuit board 220 may include multiple processors 235, one for each RFID reader 145. The processors 235 in the LED light circuit board may communicate with each other over a bus, such as I²C (Inter-Integrated Circuit) or over any other communication mechanism. Producing the LED light circuit board 220 to include the single processor 235 may be less expensive than producing the LED light circuit board 220 to include the multiple processors 235. The processor 235 and/or the multiplexer 240 may be included in a circuit not on the LED light circuit board 220 in some examples. The light fixture 130 may be in communication with a light adapter 210. The light adapter 210 may include a processor 245 and a memory 248. The memory 248 may include the communication module 135. Alternatively, the communication module 135 may be implemented as hardware or a combination of hardware and software. For example, the communication module 135 may include the processor 245 and the memory 248.

The power device 140 may include a processor 250, a memory 255, a communication circuit 260, and a power source 265. The communication circuit 260 may be any circuit that communicates with the communication module 135 in the light adapter 210. The power source 265 may be any component that provides power, such as an AC/DC (Alternating Current/Direct Current) converter. In one example, the power source 265 may provide power on a line over which the communication circuit 260 communicates.

The processor 235 of the light fixture 130, the processor 245 of the light adapter 210, and/or the processor 250 of the power device may be one or more devices operable to execute computer executable instructions or computer code embodied in memory such as the memory 248 or 255 of the light adapter 210 or the power device 140. Each one of the processors 235, 245, and 250 may be a general processor, a central processing unit, an application specific integrated circuit (ASIC), a digital signal processor, a microcontroller, a field programmable gate array (FPGA), a digital circuit, an analog circuit, any other type of processor or a combination thereof. The memory 248 and 255 may be a non-volatile and/or volatile memory, such as a random access memory (RAM), a read-only memory (ROM), an erasable programmable read-only memory (EPROM), flash memory, any other type of memory now known or later discovered, or any combination thereof. In some examples, the memory 248 and/or 255 may include one or more storage devices, such as a flash drive, an optical storage device, a magnetic storage device (hard-drive) or any other form of data storage device.

The memory 248 or 255 may hold the programs and processes that implement the logic described above for execution by the processor 245 or 250. For example, the memory 248 may store program logic that implements the features of the communication module 135.

During operation of the systems 100 and 120, the processor 235 or the processors 235 of the light fixture 130 may regularly check for any detection of the RFID tags 165. For example, every 1 to 15 seconds, the processor 235 of the light fixture 130 may check whether any of the RFID tags are detectable by the RFID readers 145. The light adapter 210 may receive the device identifiers associated with the detected RFID tags 165 from the RFID readers 145 in the light fixture 130 through the processor 235 of the light fixture 130. For example, the processor 245 of the light adapter 210 may communicate with the processor 235 of the light fixture 130 over a bus, such as I²C (Inter-Integrated Circuit) or over any other communication mechanism. The processor 235 of the light fixture 130 may provide the processor 245 of the light adapter 210 and/or the communication module 135 with a message or messages that indicate the device 110 identified by the device identifier is added to and/or removed from the modular equipment rack 155.

Alternatively, the processor 245 of the light adapter 210 may perform the features of the processor 235 of light fixture 130 so that the light fixture 130 does not include the processor 235. For example, the processor 245 of the light adapter 210 may receive the device identifiers directly from the RFID readers 145 in the light fixture 130 instead of indirectly from the RFID readers 145.

The communication module 135 of the light adapter 210 may transmit the device identifiers to the power device 140. The communication circuit 260 of the power device 140 may receive the device identifiers from the communication module 135 of the light adapter 210. One or more of the processors 235, 245, and 250 may determine that the rack-mount device 110 is not in the rack 155 anymore when the previously detected device identifier is no longer detected by the RFID reader 145.

The light adapter 210 may receive information from devices in addition to the light fixture 130. For example, the light adapter 210 may receive sensor information from a motion detector 270 and a temperature sensor 275. The communication module 135 of the light adapter 210 may transmit the sensor information to the power device 140. The communication circuit 260 of the power device 140 may receive the sensor information from the communication module 135 of the light adapter 210. Alternatively or in addition, the light adapter 210 may include input devices, such as the motion detector 270 and the temperature sensor 275, and/or output devices, such as a speaker.

The multiple RFID readers 145 positioned along the light fixture 130 may identify the relative positions of the rack-mount devices 110 in the rack 155. Each one of the RFID readers 145 may be located substantially adjacent to a position in the rack 155 at which the rack-mount device 110 may be added. In other words, each one of the RFID readers 145 may be located so as to read the RFID tag 165 on the device 110 when the device 110 is mounted in a corresponding one of multiple mounting positions in the rack 155. The mounting positions may be the positions in the rack 155 where edges or ears protrude so as to facilitate the device 110 being fastened to the rack 155 with screws. Each one of the RFID readers 145 on the LED light circuit board 220 may have a unique address on a bus over which the RFID readers 145 communicate. In one example, the unique addresses may be predetermined and correspond to a predetermined position along the light fixture 130. In a second example, the unique addresses may be dynamically assigned to a corresponding position along the light fixture 130. Accordingly, the address of the RFID reader 145 that reads the RFID tag 165 may indicate where the rack-mount device 110 coupled to the RFID tag 165 is installed.

The power device 140 may store the device identifiers of the rack-mount devices 110 in the memory 255 of the power device 140. For example, the power device 140 may store the device identifiers and other associated information in a database in the memory 255. The power device 140 may store the device identifiers of the rack-mount devices 110 that are currently and/or previously detected in the racks 155 in the memory 255. The power device 140 may store the position in the rack 155 at which each the one of the devices 110 identified by the device identifiers is detected.

The power device 140 may maintain a log of any changes to the installation of the rack-mount devices 110 in the racks 155. The log may identify, for example: when each one of the rack-mount devices 110 was added to and/or removed from the rack 155; the user identifier that identifies who added or removed the rack-mount device 110; an identification of the rack 155 to or from which the rack-mount device 110 was added and/or removed; and/or an identification of a position in the rack 155 to or from which the rack-mount device 110 was added or removed. A log of any changes to an installation of a plurality of rack-mount devices in a plurality of modular equipment racks 150 may be maintained in a log, where the rack-mount devices may include the device 150 mounted in the modular equipment rack 155, and where the modular equipment racks 155 may include the modular equipment rack 155.

In response to a user request to locate one of the rack-mount devices 110, the power device 140 may cause the light fixture 130 associated with the rack 155 containing the rack-mount device 110 to flash, illuminate or generate any type of light pattern. Alternatively or in addition, the power device 140 may cause a speaker in or near the rack 155 to emit an audible signal. For example, the speaker may be included in the light adapter. To help a user to find the rack-mount device 110 among a group of the rack-mount devices 110 in the rack 155, the power device 140 may cause one or more of the LEDs 230 positioned near where the rack-mount device 110 is installed to generate a light pattern different from the other LEDs 230 in the light fixture 130.

The power device 140 may conserve power by turning on the light fixtures 130 that are in the racks 155 where the motion detectors 270 detect motion, but turning off the light fixtures 130 that are in the racks 155 where the motion detectors 270 detect no motion or no motion for a determined period of time. Alternatively or in addition, the power device 140 may limit which of the light fixtures 130 are turned on based on the amount of light detected by light sensors co-located with the racks 155.

Each one of the components in the systems 100 and 120 may include more, fewer, or different elements. For example, the rack 155 may include the light adapter 210 and/or the communication module 135. Alternatively or in addition, the rack 155 may include multiple antennas 150 and/or multiple light fixtures 130 oriented in a number of ways. As another example, the power device 140 may include a network adapter, such as an Ethernet card, for communication over a packet-switched network, such as an Internet Protocol (IP) network. Computing devices may communicate with the power device 140 over the packet-switched network. Multiple power devices 140 may communication with each other over the packet-switched network. The power devices 140 may pass data onto a centralized or distributed database and/or share data with each other.

The systems 100 and 120 may be implemented in many different ways. For example, although some features are shown stored in computer-readable memories (e.g., as logic implemented as computer-executable instructions or as data structures in memory), all or part of the systems 100 and 120 and the corresponding logic and data structures may be stored on, distributed across, or read from other machine-readable storage media. The media may include memories, hard disks, floppy disks, CD-ROMs, or any other type storage medium.

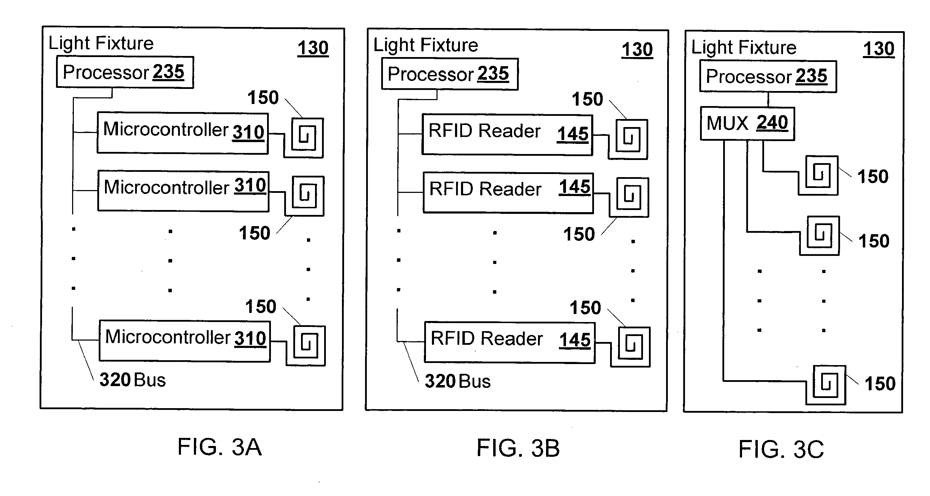

Components of the light fixture 130, with or without the LED light circuit board 220, may interoperate with the antennas 150 in any number of ways. FIGS. 3A-3C illustrate example embodiments of the light fixture 130 in which components, such as the processor 235, interoperate with the antennas 150.

FIG. 3A illustrates an example of the light fixture 130 in which the processor 235 communicates with microcontrollers 310 or other type of processors over a bus 320. Each one of the microcontrollers 310 may implement the features of the RFID reader 145 and, therefore, be coupled directly to a corresponding one of the antennas 150. Alternatively, each one of the microcontrollers 310 may be coupled to a corresponding one of multiple RFID readers 145, where each one of the RFID readers 145 is coupled to the corresponding one of the antennas 150. The processor 235 may receive the device identifiers and, in some examples, additional information from the microcontrollers 310 over the bus 320. The processor 235 may provide the device identifiers and, in some examples, the additional information to the processor 245 of the light adapter 210.

FIG. 3B illustrates an example of the light fixture 130 in which the processor 235 of the light fixture 130 communicates with the RFID readers 145 over the bus 320. Each one of the RFID readers 145 may be coupled to a corresponding one of the antennas 150. The processor 235 may receive the device identifiers and, in some examples, additional information from the RFID readers 145 over the bus 320. The processor 235 of the light fixture 130 may provide the device identifiers and, in some examples, the additional information to the processor 245 of the light adapter 210.

FIG. 3C illustrates an example of the light fixture 130 in which the processor 235 of the light fixture 130 is selectively electrically coupled to the antennas 150 through the multiplexer 240. The processor 235 may implement the features of the RFID reader 145. The processor 235 may direct the multiplexer 240 to select one of the antennas 150. The processor 235 may attempt to detect the RFID tag 165 of any of the rack-mount devices 110 through the antenna selected by the multiplexer 240. The processor 235 may direct the multiplexer 240 to select a next one of the antennas 150, and repeat, to determine whether the RFID tag 165 of any of the rack-mount devices 110 may be read by any of the antennas 150. In addition, the processor 235 may determine which of the antennas 150 detected the RFID tag 165 based on which one of the antennas 150 is selected by the multiplexer 240. Knowing which one of the antennas 150 detected the RFID tag 165 may indicate the location of the rack-mount device 110 tagged with the RFID tag 165.

In an alternative to the example illustrated in FIG. 3C, a single RFID reader 145 may be coupled to the output of the multiplexer 240 instead of the processor 235 implementing the features of the RFID reader 145. The processor 235 may communicate with the RFID reader 145 and control, with the multiplexer 240, which one of the antennas 150 the RFID reader 145 is electrically coupled to. The processor may receive any of the detected device identifiers from the RFID reader 145.

The processing capability of the systems 100 and 120 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library (e.g., a dynamic link library (DLL)).

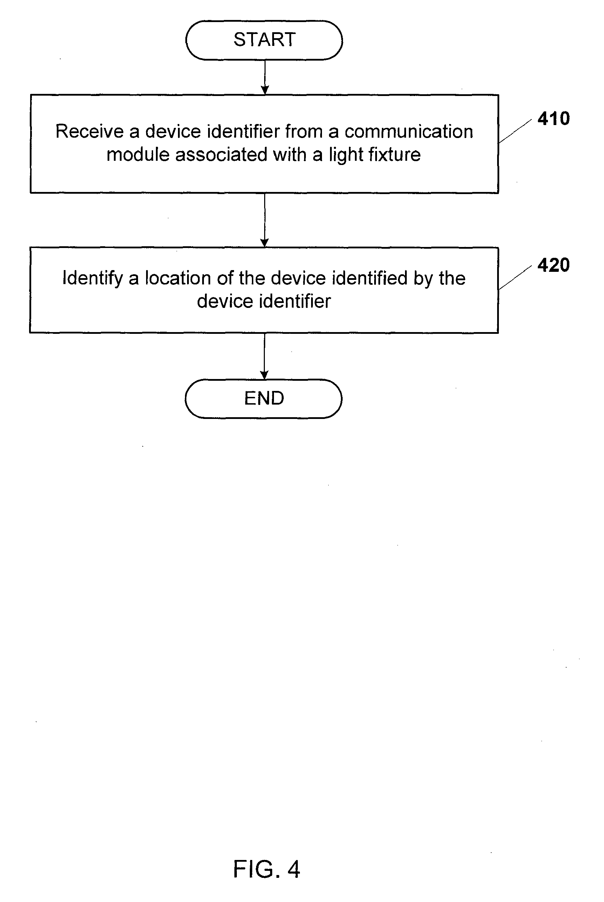

FIG. 4 illustrates a flow diagram of example logic of the system 100 for tracking rack-mount devices. The logic may include additional, different, or fewer operations. The operations may be executed in a different order than illustrated in FIG. 4.

The operations may begin with the device identifier being received from the communication module 135 associated with the light fixture 130 that is co-located with the modular equipment rack 155 (410). The device identifier may identify the rack-mount device 110 determined to be mounted in the modular equipment rack 155 based on the RFID tag 165 being read by the RFID reader 145, where the RFID tag 165 is coupled to the rack-mount device 110. The communication module 135 may receive the device identifier from the RFID reader 145.

The location of the rack-mount device 110 may be identified based on receipt of the device identifier from the communication module 135 and on the light fixture 130 associated with the communication module 135 being co-located with the modular equipment rack 155 (420). For example, the light fixture 130 that is co-located with the modular equipment rack 155 in which the rack-mount device 110 is mounted is caused to generate a light signal, such as a flashing signal.

The operations may end by, for example, listening for additional messages from the communication module 135. The additional message may indicate, for example, whether the rack-mount device 110 is removed from the rack 155 and/or additional rack-mount devices 110 are added to the rack 155.

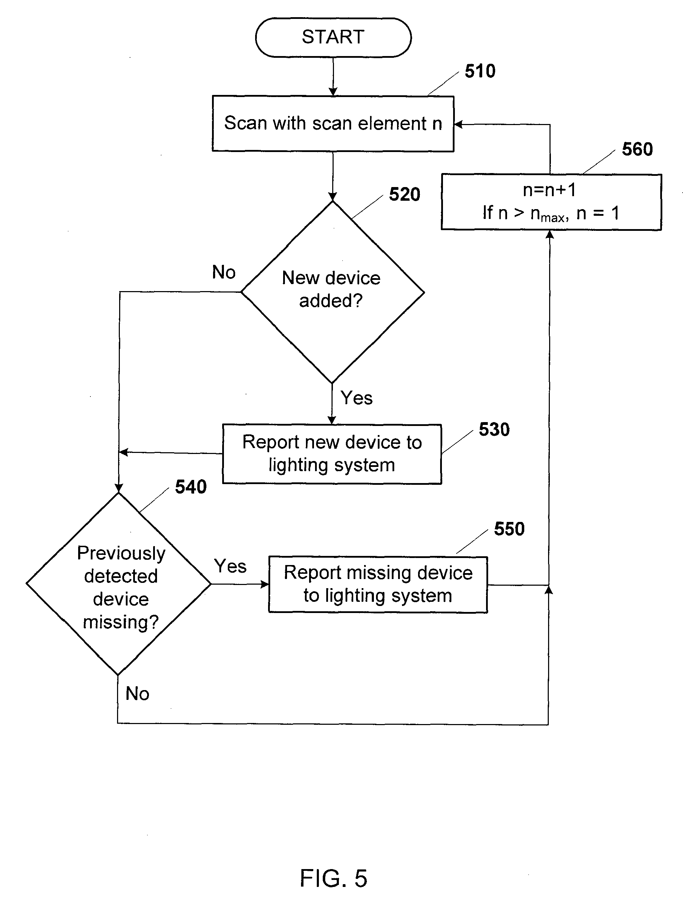

FIG. 5 illustrates a flow diagram of example logic of the system 100 for tracking rack-mount devices 110. The operations may be executed in a different order than illustrated in FIG. 5.

The operations may start by performing a scan with an n^{th} one of nₘₐₓ scan elements (510). The scan element may include the antenna 150, the corresponding RFID reader 145, and/or the corresponding processor 235 or 245. The total number of the scan elements in the rack 155 may be nₘₐₓ. In one example of performing the scan, the processor 235 in FIG. 3C may select the n^{th} antenna 150 with the multiplexer 240 and attempt to detect the RFID tag 165 with the n^{th} antenna 150.

Next, a determination may be made whether a new device 110 has been added to the rack 155 (520). For example, the processor 235 or 245 of the light fixture 130 or the light adapter 210 may determine whether any device 110 was previously detected with the n^{th} scan element. If the currently detected rack-mount device 110 was not previously detected in the mounting position(s) monitored by the n^{th} scan element, then the processor 235 or 245 may determine that the device 110 was added.

If the rack-mount device 110 was added, then the addition of the device 110 may be reported to the lighting system 120 (530). For example, the processor 235 or 245 of the light fixture 130 or the light adapter 210 may transmit one or more messages identifying the newly added rack-mount device 110 to the power device 140.

After the addition of the device 110 is reported, or if no new device 110 was added, then a determination may be made whether any rack-mount device 110 previously detected with the n^{th} scan element is missing (540). For example, the processor 235 or 245 of the light fixture 130 or the light adapter 210 may determine whether any device 110 was previously detected with the n^{th} scan element. If the device 110 was previously detected but is currently not detected with the n^{th} scan element, then the processor 235 or 245 may determine that the previously detected device 110 was removed or is missing from the mounting position(s) monitored by the n^{th} scan element.

If the rack-mount device 110 is missing, then a failure to detect the rack-mount device 110 may be reported to the lighting system 120 (550). For example, the processor 235 or 245 of the light fixture 130 or the light adapter 210 may transmit one or more messages identifying the missing rack-mount device 110 to the power device 140. After the failure to detect the rack-mount device 110 is reported, or if no device 110 is missing, then the operations may proceed to an iteration operation.

In the iteration operation, the scan element index, n, may be incremented (or decremented). If the incremented (or decremented) index is out of range, then the index may be wrapped to remain in a proper range (560). For example, if n is incremented and exceeds nₘₐₓ, then n may be set to 1. The operations may return to performing a scan with the n^{th} scan element (510), where n is the incremented, decremented, or wrapped value. In an alternative example, if the scan element index is out of range in the iteration operation, then the operations may end by waiting for an event to restart the scanning. The event may be a timer expiring, for example.

The logic may include additional, different, or fewer operations than illustrated in FIG. 5. For example, a scan may be performed with each one of the n scan elements, locally recording the device identifiers detected during the scan. For example, the device identifiers may be recorded in the memory 248 of the light adapter 210. After scanning with all of the scan elements, a comparison may be made of the list of recorded device identifiers with a list of device identifiers detected in a previous scan. If any device identifiers are newly detected that were not previously detected, then the newly detected device identifiers may transmitted to the power device 140 as identifying the devices 110 that were added to the rack 155. If any device identifiers that were previously detected are no longer detected, then the missing device identifiers may be transmitted to the power device 140 as identifying the devices 110 that were removed from the rack 155.

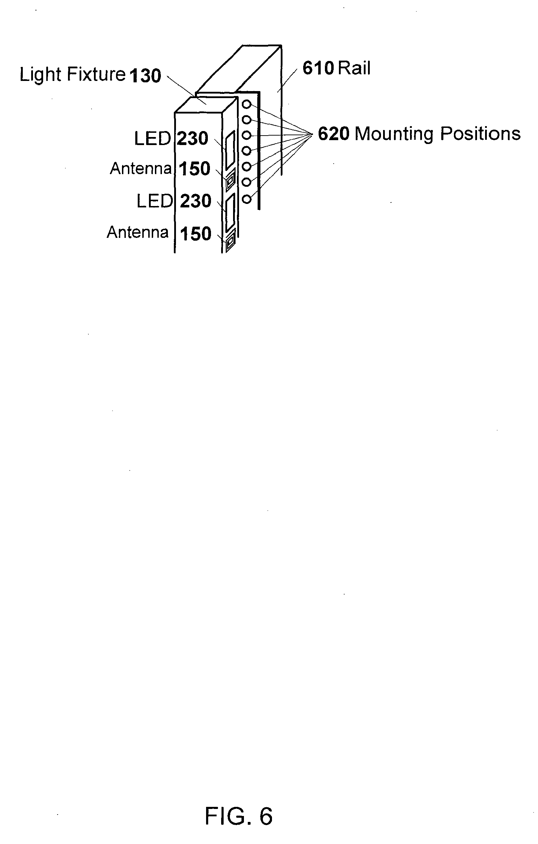

FIG. 6 illustrates an example of the light fixture 130 adjacent to a rail 610 of the rack. The antennas 150 in the light fixture 130 are positioned adjacent to mounting positions 620 of the rack 155. Each one of the antennas 150 is adjacent to a corresponding subset of the mounting positions 620. Accordingly, each one of the antennas 150 may detect the RFID tag 165 affixed to the rack-mount device 110 that is positioned in any of the corresponding subset of the mounting positions 620.

The antennas 150 may be arranged along a side of the modular equipment rack 155. Each one of the antennas 150 may be positioned to be within range of the RFID tag 165 when the device 110 is mounted in a respective one of a plurality of mounting positions 620 in the modular equipment rack 155. Each one of the antennas 150 may be a spiral trace antenna.

The light fixture 130 may further comprise the multiplexer 240 and the plurality of RFID readers 145, wherein the processor 235 may be configured to selectively communicate with the RFID readers 145 through the multiplexer 240, and the RFID readers 145. The light fixture 130 may further comprise the multiplexer 240 and the plurality of antennas 150, wherein the processor 235 may be configured to select a signal from any one of the antennas 150 with the multiplexer 240.

All of the discussion, regardless of the particular implementation described, is exemplary in nature, rather than limiting. For example, although selected aspects, features, or components of the implementations are depicted as being stored in memories, all or part of systems and methods consistent with the innovations may be stored on, distributed across, or read from other computer-readable storage media, for example, secondary storage devices such as hard disks, floppy disks, and CD-ROMs; or other forms of ROM or RAM either currently known or later developed. The computer-readable storage media may be non-transitory computer-readable media, which includes CD-ROMs, volatile or non-volatile memory such as ROM and RAM, or any other suitable storage device. Moreover, the various modules and screen display functionality is but one example of such functionality and any other configurations encompassing similar functionality are possible.

Furthermore, although specific components of innovations were described, methods, systems, and articles of manufacture consistent with the innovation may include additional or different components. For example, a processor may be implemented as a microprocessor, microcontroller, application specific integrated circuit (ASIC), discrete logic, or a combination of other type of circuits or logic. Similarly, memories may be DRAM, SRAM, Flash or any other type of memory. Flags, data, databases, tables, entities, and other data structures may be separately stored and managed, may be incorporated into a single memory or database, may be distributed, or may be logically and physically organized in many different ways. The components may operate independently or be part of a same program. The components may be resident on separate hardware, such as separate removable circuit boards, or share common hardware, such as a same memory and processor for implementing instructions from the memory. Programs may be parts of a single program, separate programs, or distributed across several memories and processors.

The respective logic, software or instructions for implementing the processes, methods and/or techniques discussed above may be provided on computer-readable media or memories or other tangible media, such as a cache, buffer, RAM, removable media, hard drive, other computer readable storage media, or any other tangible media or any combination thereof. The tangible media include various types of volatile and nonvolatile storage media. The functions, acts or tasks illustrated in the figures or described herein may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the logic or instructions are stored in a remote location for transfer through a computer network or over telephone lines. In yet other embodiments, the logic or instructions are stored within a given computer, central processing unit ("CPU"), graphics processing unit ("GPU"), or system.

To clarify the use of and to hereby provide notice to the public, the phrases "at least one of <A>, <B>, ... and <N>" or "at least one of <A>, <B>, ... <N>, or combinations thereof" or "<A>, <B>, ... and/or <N>" are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

While various embodiments of the innovation have been described, it will be apparent to those of ordinary skill in the art that many more embodiments and implementations are possible within the scope of the innovation. Accordingly, the innovation is not to be restricted except in light of the attached claims and their equivalents.

## Claims

1. A system (100) for tracking rack-mount devices, the system comprising:
a light fixture (130) comprising a radio frequency identification (RFID) reader (145) and/or an antenna (150), the RFID reader and/or the antenna configured to read an RFID tag (165) that is coupled to a device (110) mountable in a modular equipment rack (155); and
a communication module (135) configured to cause a device identifier to be transmitted to a power device (140) that powers the light fixture (130), wherein the device identifier identifies the device (110) determined to be mounted in the modular equipment rack (155) based on the RFID tag (165) that is read by the RFID reader (145) and/or the antenna (150).

2. The system of claim 1, wherein the light fixture comprises a plurality of antennas, the antennas are positioned along an axis of the modular equipment rack, and each one of the antennas is positioned to read the RFID tag when the device is mounted in a respective one of a plurality of mounting positions (620) in the modular equipment rack, and the antennas include the antenna.

3. The system of any of claims 1 to 2, wherein the light fixture comprises a plurality of Light Emitting Diodes (230) positioned along an axis of the modular equipment rack.

4. The system of any of claims 1 to 3, further comprising the modular equipment rack, wherein the light fixture is coupled to the modular equipment rack.

5. The system of any of claims 1 to 4, wherein the light fixture is a rack-mount light installed in the modular equipment rack.

6. The system of any of claims 1 to 5 further comprising a card reader (160) coupled to the modular equipment rack, wherein the card reader is configured to read a user identifier from a card, the communication module is configured to cause the user identifier to be transmitted to the power device (140), and the power device stores an indication that a person identified by the user identifier mounted the device in the modular equipment rack.

7. A light fixture (130) for tracking rack-mount devices, the light fixture comprising:
a radio frequency identification (RFID) reader (145) and/or an antenna (150) positioned to read an RFID tag (165) coupled to a device (110) when the device is mounted in a modular equipment rack (155); and
a processor (235) that provides a message comprising a device identifier to a lighting system (120), wherein the message indicates that the device (110) identified by the device identifier is added to and/or removed from the modular equipment rack (155) based on whether the RFID reader (145) and/or the antenna (150) detects the RFID tag (165) coupled to the device.

8. The light fixture of claim 7, wherein the light fixture is embedded in a rail (610) of the modular equipment rack.

9. The light fixture of any of claims 7 to 8, wherein the light fixture further comprises a plurality of RFID readers (145), each one of the RFID readers is configured to read the RFID tag (165) when the device is mounted in a respective one of a plurality of mounting positions (620) in the modular equipment rack, and the RFID readers include the RFID reader.

10. The light fixture of any of claims 7 to 9, wherein the light fixture further comprises a plurality of antennas 150, the antennas are arranged along a side of the modular equipment rack, wherein each one of the antennas is positioned to be within range of the RFID tag when the device is mounted in a respective one of a plurality of mounting positions (620) in the modular equipment rack, and wherein the antennas include the antenna.

11. The light fixture of claim 10, wherein each one of the antennas is embedded in a LED (Light Emitting Diode) light circuit board (220) that is configured to receive a plurality of Light Emitting Diodes (230).

12. The light fixture of any of claims 10 to 11, wherein each one of the mounting positions (620) in the modular equipment rack is adjacent to a respective one of the antennas (150).

13. A method of tracking rack-mount devices with a lighting system 120, the method comprising:
receiving, with a processor (250), a device identifier from a communication module (135) associated with a light fixture (130), wherein the light fixture is co-located with a modular equipment rack (155), wherein the device identifier identifies a device (110) determined to be mounted in the modular equipment rack based on a radio frequency identification (RFID) tag (165) read by a RFID reader (145), wherein the communication module receives the device identifier from the RFID reader, and wherein the RFID tag is coupled to the device; and
identifying a location of the device (110) with the processor (250) based on receipt of the device identifier from the communication module and on the light fixture associated with the communication module being co-located with the modular equipment rack.

14. The method of claim 13, wherein identifying the location of the device comprises causing the light fixture (130) that is co-located with the modular equipment rack (155) in which the device is mounted to generate a light signal.

15. The method of any of claims 13 to 14, wherein identifying the location of the device comprises determining which mounting position in the modular equipment rack the device is mounted in based on which one of a plurality of RFID readers in the light fixture detected the RFID tag, wherein the RFID readers include the RFID reader.
